# EUROPÄISCHE PATENTSCHRIFT

(11) **EP 1 576 909 B1**
(45) Veröffentlichungstag und Bekanntmachung des Hinweises auf die Patenterteilung: **24.05.2006**
(21) Anmeldenummer: 04006334.9
(22) Anmeldetag: 17.03.2004
(51) Int. Cl.: A47G 25/32, C09J 5/00

(54) **Verfahren und Vorrichtung zur Arretierung von Kleiderbügelhaken**
Method and device for blocking clothes hanger hooks
Procédé et dispositif pour bloquer les crochets des cintres pour vêtements

(43) Veröffentlichungstag der Anmeldung: 21.09.2005
(73) Patentinhaber: TFS-Global Hanger Management GmbH, 48529 Nordhorn (DE)
(72) Erfinder: Bode, Hermann H., 48607 Ochtrup (DE)
(74) Vertreter: Möller, Friedrich

(56) Entgegenhaltungen:
- EP-A- 0 738 672
- EP-A- 1 252 843
- EP-A- 1 354 637
- WO-A-20/04028316
- GB-A- 2 328 369
- US-A- 5 613 630

## Beschreibung

Die Erfindung betrifft ein Verfahren sowie eine korrespondierende Vorrichtung zur Arretierung, insbesondere zur Wiederarretierung der Drehbarkeit von Kleiderbügelhaken in einem Kleiderbügelkorpuseines Kleiderbügels.

Kleiderbügel sind allgemein bekannt. Bekanntlich weisen sie einen Kleiderbügelkorpus zum Aufhängen von Kleidungsstücken und einen am Kleiderbügelkorpus angreifenden Kleiderbügelhaken auf, mit dem der Kleiderbügel selbst aufgehängt wird.

Aus der GB 2 328 369 A ist ein Kleiderbügel bekannt, bei dem der Kleiderbügelhaken bei der Montage des Kleiderbügels mit einem Teilbereich in einen im Kleiderbügelkorpus gebildeten Kanal eingeführt und dort mittels eines Gewindes oder Klebstoff oder einer Kombination dieser beiden Mittel befestigt wird.

Kleiderbügel, vor allem einfache und preiswerte Kleiderbügel, werden beim Verkauf von Kleidungsstücken zu deren Präsentation verwendet. Wenn ein Kleidungsstück gekauft wird, wird üblicherweise in einem Kassenbereich der Kleiderbügel von der erworbenen Kleidung getrennt und einer Wiederverwendung zugeführt. Bei der Wiederverwendung von Kleiderbügeln gilt es u.a. sicherzustellen, dass der Kleiderbügelhaken im Kleiderbügelkorpus noch in ausreichendem Maße fixiert ist, d.h. der Kleiderbügelhaken muss noch in belastbarer Weise mit dem Kleiderbügelkorpus verbunden sein und der Kleiderbügelhaken darf im Kleiderbügelkorpus nicht zu leicht drehbar sein.

Normalerweise ist der Kleiderbügelhaken parallel zum Kleiderbügelkorpus ausgerichtet. In dieser Position lässt sich in an sich bekannter Weise auf Stangen oder dergleichen eine Vielzahl von Kleidungsstücken auf jeweils einen Kleidbügel nebeneinander anordnen. Wenn Kunden Kleidung mitsamt dem jeweiligen Kleiderbügel aufnehmen, kommt es häufig vor, dass der Kleiderbügelhaken im Kleiderbügelkorpus um ca. 90° gedreht wird und die Kleidung wieder aufgehängt wird. Damit erreicht der Kunde, dass die ausgewählte oder in engere Auswahl gezogene Kleidung großflächig für Vergleiche und ähnliches sichtbar bleibt. Solche Bewegungen des Kleiderbügelhakens führen jedoch häufig dazu, dass sich die Arretierung des Kleiderbügelhakens im Kleiderbügelkorpus löst.

Dies ist vor allem dann nachteilig, wenn ein solcher Kleiderbügel wieder verwendet wird und auf einem solchen Kleiderbügel befindliche Kleidung in automatischen Transport- oder Sortiersystemen für Kleidung bewegt wird. In solchen Systemen wird die Kleidung auf Kleiderbügeln hängend mit hoher Geschwindigkeit bewegt. Zudem sind die Systeme darauf abgestellt, dass die Kleidung in einer Ausrichtung parallel zueinander bewegt wird. Die parallele Ausrichtung der Kleidung zueinander ergibt sich dabei durch eine entsprechende Ausrichtung der die Kleidung tragenden Kleiderbügel. Eine solche Ausrichtung der Kleiderbügel ist wiederum nur zu erreichen, wenn Kleiderbügelhaken und Kleiderbügelkorpus parallel zueinander ausgerichtet sind und zudem nur eine minimale Beweglichkeit des Kleiderbügelhakens im Kleiderbügelkorpus gegeben ist.

Eine solche minimale Beweglichkeit ist häufig bereits dann nicht mehr gegeben, d.h. die Beweglichkeit liegt über einer solchen minimalen Beweglichkeit, wenn der Kleiderbügelhaken manuell verdreht worden ist. Solche Kleiderbügelhaken müssen bisher aufwändig identifiziert und ausgesondert werden. Dies ist wegen des damit verbundenen Kostenaufwands nachteilig. Ein weiterer nachteiliger Kostenaufwand ergibt sich dadurch, dass ein ausgesonderter Kleiderbügel durch einen neuen Kleiderbügel mit ausreichend starr fixiertem Kleiderbügelhaken ersetzt werden muss.

Werden ungeeignete Kleiderbügel allerdings nicht ausgesondert, kann es vorkommen, dass sich beim Transport in automatischen Transport- oder Sortiersystemen der Kleiderbügelkorpus relativ zum Kleiderbügelhaken verdreht, so dass die gewünschte parallele Ausrichtung der Kleidung nicht mehr gegeben ist. Auf dieser parallelen Ausrichtung basieren aber die automatischen Handhabungsschritte in den Transport- und Sortiersystemen, so dass es bei fehlerhafter Ausrichtung zu Beschädigungen an der Kleidung oder am Transport- und Sortiersystemen oder Komponenten desselben kommen kann. Bei derartigen Beschädigungen kann aufgrund der hohen Arbeitsgeschwindigkeiten eine Vielzahl von Kleidungstücken betroffen sein. Bei evtl. Beschädigungen am System ergeben sich erhebliche Stillstandszeiten bis die Schäden behoben sind. Auch diese Nachteile werden mit der Erfindung vermieden oder zumindest reduziert.

Der Erfindung liegt daher die Aufgabe zugrunde ein Verfahren und eine zur Ausführung des Verfahrens geeignete Vorrichtung anzugeben, mit dem bzw. mit der sich Kleiderbügel, insbesondere gebrauchte Kleiderbügel, geeignet behandeln lassen, so dass vorgegebene Eigenschaften im Hinblick auf eine Beweglichkeit (Drehbarkeit) des Kleiderbügelhakens im Kleiderbügelkorpus erfüllt sind.

Diese Aufgabe wird hinsichtlich des Verfahrens erfindungsgemäß mit den Merkmalen des Anspruchs 1 gelöst. Dazu ist bei einem Verfahren zur Arretierung, insbesondere zur Wiederarretierung, der Drehbarkeit von Kleiderbügelhaken in einem Kleiderbügelkorpus eines Kleiderbügels vorgesehen, dass der Kleiderbügelhaken insbesondere im Bereich eines Kleiderbügelhakenschafts mit einem kapillar fließfähigen Klebstoff benetzt wird und dass der Klebstoff im Bereich einer Verbindungsstelle zwischen Kleiderbügelhaken und Kleiderbügelkorpus in einen Spalt zwischen Kleiderbügelhaken und Kleiderbügelkorpus eindringt. Der Kleiderbügelhaken wird also mit dem Kleiderbügelkorpus verklebt.

Bezüglich der Vorrichtung wird die genannte Aufgabe erfindungsgemäß gelöst durch die Merkmale des Anspruchs 5. Dazu ist eine Vorrichtung zur Arretierung, insbesondere zur Wiederarretierung, der Drehbarkeit von Kleiderbügelhaken in einem Kleiderbügelkorpus eines Kleiderbügels vorgesehen, die einen eine Pipette und einen kapillar fließfähigen Klebstoff umfassenden Klebstoffapplikator, der einer Transportvorrichtung zum Transport von Kleiderbügeln zugeordnet ist, aufweist, wobei die Pipette mit ihrem freien Ende im Bereich der Bewegungsbahn der Kleiderbügel positioniert ist, derart, dass beim Transport der Kleiderbügel die Pipette mit ihrem freien Ende sukzessive jeweils einen Kleiderbügelhaken insbesondere im Bereich eines Kleiderbügelschafts berührt zum Auftragen des kapillar fließfähigen Klebstoffs im Bereich einer Verbindungsstelle zwischen Kleiderbügelhaken und Kleiderbügelkorpus derart, dass der kapillar fließfähige Klebstoff in einen Spalt zwischen Kleiderbügelhaken und Kleiderbügelkorpus eindringt.

Zum Aufbringen des Klebstoffs auf den Kleiderbügelhaken ist demnach vorgesehen, dass die Pipette den Kleiderbügelhaken vorzugsweise im Bereich eines Kleiderbügelhakenschafts berührt. Der Kleiderbügelhakenschaft ist ein gerader oder im Wesentlichen gerader Abschnitt unterhalb des eigentlichen Hakens am Kleiderbügelhaken. Am Kleiderbügelhakenschaft kann der Klebstoff abwärts in Richtung auf den im Bereich der Verbindungsstelle zwischen Kleiderbügelhaken(schaft) und Kleiderbügelkorpusverbleibenden Spalt fließen. Das Auftragen des Klebstoffs auf den Kleiderbügelhakenschaft hat zudem beim automatischen Auftragen des Klebstoffs mittels einer dazu vorgesehenen Vorrichtung den Vorteil, dass unterschiedliche Typen, insbesondere unterschiedliche Größen, von Kleiderbügeln mit der gleichen Vorrichtung verarbeitet werden können. Eine bei gebräuchlichen Kleiderbügeln auf eine Mitte des Kleiderbügelhakenschafts ausgerichtete Positionierung der Pipette ermöglicht nämlich auch eine Verarbeitung von Kleiderbügeln mit kürzeren oder längeren Kleiderbügelhakenschäften

Der Vorteil der Erfindung besteht darin, dass der Kleiderbügel durch Verkleben des Kleiderbügelhakens mit dem Kleiderbügelkorpus wieder verwendbar wird, da der Kleiderbügelhaken durch Verkleben in der gewünschten vorzugsweise parallelen Orientierung zum Kleiderbügelkorpus fixiert wird und das Verkleben ein unerwünschtes Verdrehen verhindert. Dabei bleibt der verklebte Kleiderbügelhaken im Kleiderbügelkorpus gleichwohl drehbar, so dass der Endkunde bei der Auswahl von Kleidung nicht darauf aufmerksam wird, dass es sich um einen wieder verwendeten Kleiderbügel handelt. Die zum Verdrehen des Kleiderbügelhakens aufzuwendende Kraft ist jedoch so hoch, dass beim automatischen Transport von Kleiderbügeln mit daran angebrachter Kleidung keine solche Verdrehung zu besorgen ist.

Vorteilhafte Ausgestaltungen der Erfindung sind Gegenstand der Unteransprüche.

Zum Aufbringen des Klebstoffs auf den Kleiderbügelhaken eignet sich besonders eine Pipette. Bevorzugt ist bei einer solchen Pipette das freie Ende, also das Ende mit einer Austrittsöffnung für den Klebstoff, elastisch. Wenn zudem das freie, elastische Ende der Pipette derart positioniert und ausgerichtet ist, dass sich eine Überkreuzung mit dem Kleiderbügelhakenschaft ergibt, ist eine Benetzung des Kleiderbügelhakenschafts auch noch bei pendelnden Kleiderbügeln gewährleistet.

Der verwendete Klebstoff ist ein kapillar fließfähiger Klebstoff. Ein solcher Klebstoff ist besonders geeignet, in den an der Verbindungsstelle zwischen Kleiderbügelhaken(schaft) und Kleiderbügelkorpus verbleibenden Spalt einzudringen. Dabei kommt besonders bevorzugt ein kapillar fließfähiger Klebstoff zum Einsatz, der beim Einkappilieren schneller als an der Umgebungsluft aushärtet. Dann kann der flüssige Klebstoff sich in Richtung des Spaltes bewegen ohne vorschnell auszuhärten. Im Spalt erfolgt dann ein relativ schnelles Aushärten, so dass die gewünschte Fixierung des Kleiderbügelhakens erreicht wird. Durch die kapillare Fließfähigkeit des Klebstoffs ist die Menge des benötigten Klebstoffs auf ein Minimum begrenzt, was im Hinblick auf die nicht unerheblichen Kosten eines solchen kapillar fließfähigen Spezial-Klebstoffs von Interesse ist. Der am Kleiderbügelhaken noch verbleibende Klebstoff kann ggf. abgewischt werden. Günstiger ist jedoch, vor Wiederverwendung des derart behandelten Kleiderbügelhakens die vollständige Aushärtung des Klebstoffs abzuwarten, so dass der am Kleiderbügelhaken verbleibende Klebstoff weder optisch noch haptisch auffällt.

Die kapillare Fließfähigkeit des Kunststoffs wirkt sich günstig auch bei Situationen aus, bei denen das Verdrehen des Kleiderbügelhakens im Kleiderbügelkorpus eine Menge von Kunststoffmehl im Innern des Korpus erzeugt hat. Zwischen diesen Mehlpartikeln und dem Kleiderbügelhaken oder dem Kleiderbügelkorpus ergeben sich besonders kleine Zwischenräume, die gleichwohl noch von dem kapillar fließfähigen Klebstoff ausgefüllt werden. Das sich aufgrund der Beschädigung des Kleiderbügels beim Verdrehen des Kleiderbügelhakens ergebende Kunststoffmehl trägt also sogar noch zur sicheren Wiederarretierung des Kleiderbügelhakens bei.

Ein weiterer günstiger Effekt im Zusammenhang mit der Verwendung kapillar fließfähigen Klebstoffs besteht darin, dass bei einem einmal verklebter Kleiderbügelhaken beim Verdrehen zwar die momentane Verklebung aufgebrochen wird, dass aber dabei ein nur minimaler Spalt entsteht, der in gewissem Umfang durch den Klebstoff aufgrund einer verbliebenen oder verbleibenden Restviskosität selbst wieder geschlossen wird. Es ergibt sich also in gewissem Umfang ein "Selbstheilungseffekt" für gelöste wiederarretierte Kleiderbügelhaken.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Darin zeigen
- Fig. 1: einen Kleiderbügel und eine Pipette als Teil eines nicht näher dargestellten Klebstoffapplikators,
- Fig. 2: ein Detail des Kleiderbügels im Bereich einer Verbindungsstelle zwischen Haken und Korpus des Kleiderbügels sowie die Situation unmittelbar vor dem Auftrag des Klebstoffs
und
- Fig. 3: das Detail des Kleiderbügels mit aufgetragenem Klebstoff, der in einen Spalt an der Verbindungsstelle zwischen Haken und Korpus des Kleiderbügels fließt und dort den Haken im Korpus verklebt.

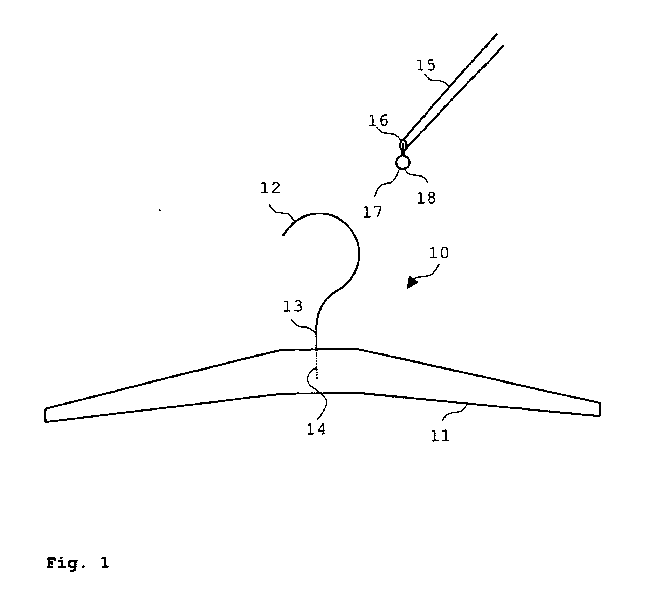

**Fig. 1** zeigt einen Kleiderbügel **10** mit einem Kleiderbügelkorpus **11** und einem Kleiderbügelhaken **12**. Kleiderbügelkorpus 11 und Kleiderbügelhaken 12 werden im Folgenden jeweils kurz auch als Korpus 11 bzw. Haken 12 bezeichnet. Der Haken 12 ist üblicherweise aus einem metallischen Material gefertigt, während der Korpus 11 aus einem Kunststoff oder dergleichen, ggf. auch aus Holz oder Metall gefertigt ist. Haken 12 und Korpus 11 sind miteinander verbunden indem der Haken 12 im Bereich eines Kleiderbügelhakenschafts **13**, im Folgenden kurz auch als Schaft 13 bezeichnet, teilweise in den Korpus 11 eindringt. Der weitere Verlauf des sich im Innern der Korpus 11 erstreckenden Schafts 13 ist durch die gestrichelte Linie **14** verdeutlicht. Korpus 11 und Haken 12 werden bei der Herstellung miteinander verbunden. Bei gebräuchlichen Kleiderbügeln 10 mit einem aus Kunststoff gefertigten Korpus 11 wird der Haken 12 bereits bei der Spritzgussherstellung des Korpus 11 mit diesem verbunden. Mit dem Aushärten des Materials aus dem der Korpus 11 gefertigt ist, ist der Haken 12 in diesem fixiert. Häufig ist zur besseren Fixierung des Hakens 12 im Korpus 11 vorgesehen, dass der Haken am unteren, innerhalb des Korpus 11 befindlichen Ende geriffelt oder aufgerauht ist oder in sonstiger Weise eine Oberflächenkontur aufweist, die das Verdrehen des Hakens 12 im Korpus 11 erschwert.

Beim Einsatz solcher Kleiderbügel 10 kommt es dennoch immer wieder vor, dass der Haken 12 im Korpus 11 verdreht wird. Dabei wird die innige Verbindung zwischen dem Haken 12 und dem Material des Korpus 11 zerstört, so dass der Haken 12 häufig leicht drehbar ist. Diese leichte Drehbarkeit des Hakens 12 steht der Wiederverwendbarkeit des Kleiderbügels 10 entgegen, weil mit derart beeinträchtigten Kleiderbügeln 10 kein Transport von Kleidung auf diesen Bügeln 10 in einer Ausrichtung parallel zueinander mit ausreichender Sicherheit gewährleistet ist. Die Erfindung sieht daher, um die Wiederverwendbarkeit solcher Kleiderbügel 10 zu steigern, vor, dass der Kleiderbügelhaken 12 im Kleiderbügelkorpus 11 verklebt wird. Dies geschieht mit einer nicht näher dargestellten Vorrichtung, die einen Klebstoffapplikator umfasst, der in einer Pipette **15** endet. Zum Klebstoffapplikator gehört ein Klebstoffvorratsbehälter mit einem darin befindlichen Klebstoffvorrat. Die Vorrichtung ist insgesamt in geeigneter Weise mechanisch befestigt und einer Transportvorrichtung zum Transport hängender Kleiderbügeln 10 zugeordnet, so dass ein sukzessives Verkleben einer Vielzahl von nacheinander an der Vorrichtung vorbei bewegter Kleiderbügel 10 möglich ist. Die Pipette 15 weist in an sich bekannter Weise an einem freien Ende eine Öffnung **16** auf, aus der ein Klebstoff **17** in Form eines Klebstofftropfens **18** austritt.

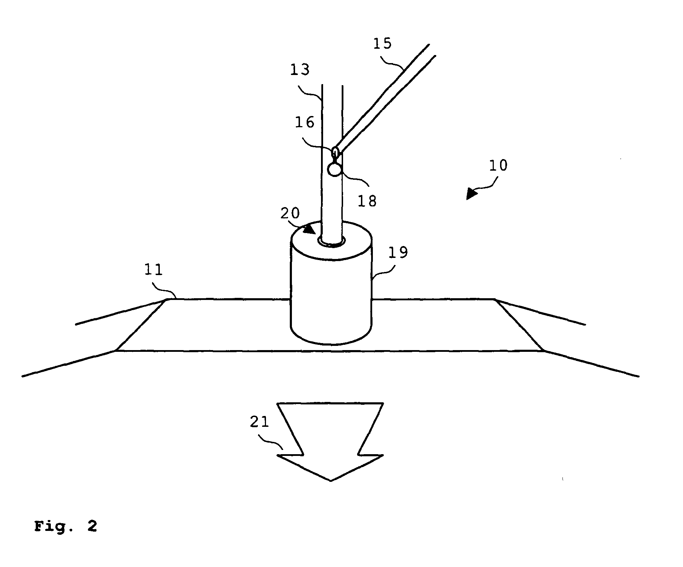

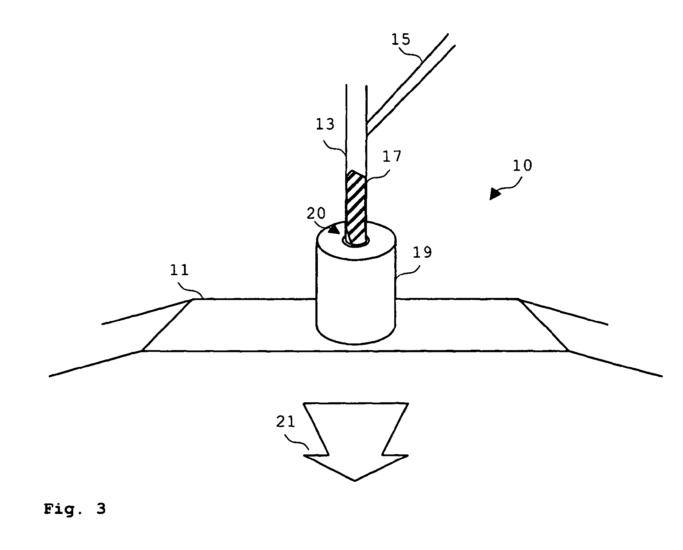

Das Verkleben des Hakens 12 im Korpus 11 wird jetzt genauer im Zusammenhang mit den Fig. 2 und 3 erläutert.

**Fig. 2** zeigt ein Detail des Kleiderbügels 10 im Bereich der Verbindungsstelle zwischen Haken 12 und Korpus 11. Von dem Haken 12 ist nur dessen unterer Abschnitt, also der Kleiderbügelhakenschaft 13 dargestellt. In der Darstellung weist der Korpus 11 eine zylindrische Hülse **19** auf. Bei Kleiderbügeln 10 anderen Typs ist eine solche Hülse 19 nicht vorhanden. Die Hülse 19 als solche ist für die Erfindung im übrigen ohne Bedeutung. Zwischen dem Schaft 13 und dem Korpus 11, in der Darstellung am oberen Ende der Hülse 19, öffnet sich ein Spalt **20**. Der Spalte 20 setzt sich im Innern des Korpus 11 entlang der Materialgrenze zwischen dem Haken 12 und dem Material des Korpus 11 fort. Zum sicheren Verkleben des Hakens 12 mit dem Korpus 11 muss der Klebstoff 17 in diesen Spalt 20 gelangen. Dazu wird bei ortsfester Pipette 15, genauer bei ortsfestem Klebstoffapplikator, der Kleiderbügel 10 an der Pipette vorbei bewegt. Die Bewegungsrichtung des Kleiderbügels 10 ist durch den Pfeil **21** verdeutlicht. Bei der Darstellung bewegt sich also der Kleiderbügel 10 gleichsam aus der Ebene des Blattes heraus in Richtung auf den Betrachter. Bei dieser Bewegung stößt der Haken 12 im Bereich seines Schafts 13 gegen die Pipette 15 und streift dabei den am freien Ende der Pipette bereits ausgetretenen Klebstofftropfen 18 ab. Die Pipette 15 ist zu diesem Zweck elastisch. Dargestellt ist eine Situation, bei der die Öffnung 16 der Pipette 15 in einer Position unmittelbar vor dem Schaft 13 justiert ist. Bevorzugt ist vorgesehen, dass vor dem Kontakt von Pipette 15 und Schaft 13 eine Überkreuzung gegeben ist, derart, dass der Schaft 13 die Pipette 15 oberhalb der Öffnung 16 trifft. Dies ermöglicht ein Auftragen von Klebstoff 17 auch bei pendelnden Kleiderbügeln 10, bei denen also der Schaft nicht - wie in der Darstellung gezeugt - genau senkrecht orientiert ist. Für die Ausführungsform der elastischen Pipette 15 kann man sich die Darstellung in Fig. 2 so vorstellen, dass die Bewegung des Kleiderbügels 10 entlang seiner Transportrichtung 21 so weit fortgeschritten und die Auslenkung der flexiblen Pipette 15 genau bis zu dem Punkt erfolgt ist, bei dem im nächsten Moment der Übertrag des Klebstofftropfens 18 auf den Schaft 13 erfolgt.

In **Fig. 3** ist die Situation gezeigt, in der ein behandelter Kleiderbügel 10 entlang seiner Transportrichtung 21 an der Pipette 15 vorbei bewegt worden ist und dabei Klebstoff 17 auf den Schaft 13 aufgebracht worden ist. Bei dem Klebstoff 17 handelt es sich um einen kapillar fließfähigen Klebstoff 17, der die Oberfläche des Schafts 13 benetzt und in Richtung des Spalts 20 fließt. Der Fluss des Klebstoffs 17 in Richtung auf den Spalt 20 erfolgt aufgrund des Gravitationseinflusses. Im Spalt 20 erfolgt die Bewegung des Klebstoffs 17 aufgrund dessen kapillarer Fließfähigkeit. Nach dem Aushärten des Klebstoffs 17 im Spalt 20 ist der Haken 12 im Korpus 11 wieder arretiert.

Aufgrund der kapillaren Fließfähigkeit des Klebstoffs 17 bildet sich an der Öffnung 16 der Pipette 15 jeweils nach dem Abstreifen eines Klebstofftropfens 18 erneut ein Klebstofftropfen 18, der dann auf den nächst folgenden Kleiberbügelhakenschaft 13 aufgebracht werden kann. Eine Förderung des Klebstoffs 17 ist also nicht zwingend erforderlich. Der (nicht dargestellte) Klebstoffapplikator umfasst also im einfachsten Fall lediglich die Pipette 15 und ein Klebstoffreservoir. In dieser Form kann der Klebstoffapplikator an einem Rahmenteil
oder dergleichen einer Transport- oder Sortiervorrichtung derart befestigt werden, dass sich die oben beschriebene Stellung der Pipette 15 relativ zu den jeweils hängend transportierten Kleiderbügeln 10 ergibt. Damit ist eine genauso einfache wie effiziente Möglichkeit zur Wiederarretierung von Kleiderbügelhaken 12 im jeweiligen Kleiderbügelkorpus 11 gegeben, die die Wiederverwendbarkeit von Kleiderbügeln 10 erheblich steigert.

Damit lässt sich die vorliegende Erfindung zusammenfassend kurz wie folgt beschreiben: Es wird ein Verfahren und eine zu dessen Ausführung vorgesehene Vorrichtung zur Arretierung, insbesondere zur Wiederarretierung, von Kleiderbügelhaken 12 in einem Kleiderbügelkorpus 11 angegeben, bei dem bzw. bei der der Kleiderbügelhaken 12 insbesondere im Bereich eines Kleiderbügelhakenschafts 13 mit einem Klebstoff 17 benetzt wird und der Klebstoff 17 im Bereich einer Verbindungsstelle zwischen Kleiderbügelhaken 12 und Kleiderbügelkorpus 11 in einen Spalt 20 zwischen Kleiderbügelhaken 12 und Kleiderbügelkorpus 11 eindringt, so dass der Kleiderbügelhaken im Kleiderbügelkorpus 11 verklebt wird.

### Bezugszeichenliste

- 10: Kleiderbügel
- 11: Kleiderbügelkorpus, Korpus
- 12: Kleiderbügelhaken, Haken
- 13: Kleiderbügelhakenschaft, Schaft
- 14: Linie
- 15: Pipette
- 16: Öffnung (der Pipette)
- 17: Klebstoff
- 18: Klebstofftropfen
- 19: Hülse
- 20: Spalt
- 21: Pfeil (Transportrichtung)

## Patentansprüche

1. Verfahren zur Arretierung, insbesondere zur Wiederarretierung, der Drehbarkeit eines Kleiderbügelhakens (12) in einem Kleiderbügelkorpus (11) eines Kleiderbügels (10), **dadurch gekennzeichnet, dass** der Kleiderbügelhaken (12) insbesondere im Bereich eines Kleiderbügelhakenschafts (13) mit einem kapillar fließfähigen Klebstoff (17) derart benetzt wird, dass der kapillar fließfähige Klebstoff (17) im Bereich einer Verbindungsstelle zwischen Kleiderbügelhaken (12) und Kleiderbügelkorpus (11) in einen Spalt (20) zwischen Kleiderbügelhaken (12) und Kleiderbügelkorpus (11) eindringt.

2. Verfahren nach Anspruch 1, **dadurch gekennzeichnet, dass** der kapillar fließfähige Klebstoff (17) auf den Kleiderbügelhaken (12) mit einer Pipette (15) aufgebracht wird, die vorzugsweise an ihrem freien Ende elastisch ist.

3. Verfahren nach Anspruch 1 oder 2, **dadurch gekennzeichnet, dass** die Pipette (15) den Kleiderbügelhaken beim Auftragen des kapillar fließfähigen Klebstoffs (17) im Bereich des Kleiderbügelhakenschafts (13) berührt.

4. Verfahren nach Anspruch 3, **dadurch gekennzeichnet, dass** das freie Ende der Pipette beim Auftragen des kapillar fließfähigen Klebstoffs (17) derart positioniert und ausgerichtet ist, dass sich eine Überkreuzung mit dem Kleiderbügelhakenschaft (13) ergibt.

5. Vorrichtung zur Arretierung, insbesondere zur Wiederarretierung, der Drehbarkeit eines Kleiderbügelhakens (12) in einem Kleiderbügelkorpus (11) eines Kleiderbügels (10), **gekennzeichnet durch** einen eine Pipette (15) und einenkapillar fließfähigen Klebstoff (17) umfassenden Klebstoffapplikator, der einer Transportvorrichtung zum Transport von Kleiderbügeln (10) zugeordnet ist, wobei die Pipette (15) mit ihrem freien Ende im Bereich der Bewegungsbahn der Kleiderbügel (10) positioniert ist, derart, dass beim Transport der Kleiderbügel (10) die Pipette (15) mit einem freien Ende sukzessive jeweils einen Kleiderbügelhaken (12) insbesondere im Bereich eines Kleiderbügelhakenschafts (13) berührt zum Auftragen des kapillar fließfähigen Klebstoffs (17) im Bereich einer Verbindungsstelle zwischen Kleiderbügelhaken (12) und Kleiderbügelkorpus (11), derart, dass der kapillar fließfähige Klebstoff (17) in einen Spalt (20) zwischen Kleiderbügelhaken (12) und Kleiderbügelkorpus (11) eindringt.

6. Vorrichtung nach Anspruch 5, **dadurch gekennzeichnet, dass** die Pipette (15) an ihrem freien Ende elastisch ist.

7. Vorrichtung nach Anspruch 6, **dadurch gekennzeichnet, dass** das freie Ende der Pipette (15) derart positioniert und ausgerichtet ist, dass sich beim Auftragen des kapillar fließfähigen Klebstoffs (17) eine Überkreuzung mit dem Kleiderbügelhakenschaft (13) ergibt.

## Claims

1. Method for blocking, in particular for re-blocking, the rotatability of a clothes hanger hook (12) in a clothes hanger body (11) of a clothes hanger (10), **characterized in that** the clothes hanger hook (12) is wetted, in particular in the region of a clothes hanger hook stem (13), with a capillary flowable adhesive (17) in such a manner that, in the region of a connecting point between clothes hanger hook (12) and clothes hanger body (11), the capillary flowable adhesive (17) penetrates a gap (20) between clothes hanger hook (12) and clothes hanger body (11).

2. Method according to Claim 1, **characterized in that** the capillary flowable adhesive (17) is applied to the clothes hanger hook (12) with a pipette (15) which is preferably elastic at its free end.

3. Method according to Claim 1 or 2, **characterized in that**, during the application of the capillary flowable adhesive (17), the pipette (15) touches the clothes hanger hook in the region of the clothes hanger hook stem (13).

4. Method according to Claim 3, **characterized in that**, during the application of the capillary flowable adhesive (17), the free end of the pipette is positioned and aligned in such a manner that an overcrossing with the clothes hanger hook stem (13) is produced.

5. Device for blocking, in particular for re-blocking, the rotatability of a clothes hanger hook (12) in a clothes hanger body (11) of a clothes hanger (10), **characterized by** an adhesive applicator which comprises a pipette (15) and a capillary flowable adhesive (17) and which is assigned to a transporting device for transporting clothes hangers (10), the pipette (15) being positioned with its free end in the region of the path of movement of the clothes hangers (10) in such a manner that, during the transporting of the clothes hangers (10), the pipette (15) with a free end successively in each case touches a clothes hanger hook (12), in particular in the region of a clothes hanger hook stem (13), in order to apply the capillary flowable adhesive (17) in the region of a connecting point between clothes hanger hook (12) and clothes hanger body (11) in such a manner that the capillary flowable adhesive (17) penetrates a gap (20) between clothes hanger hook (12) and clothes hanger body (11).

6. Device according to Claim 5, **characterized in that** the pipette (15) is elastic at its free end.

7. Device according to Claim 6, **characterized in that** the free end of the pipette (15) is positioned and aligned in such a manner that, during the application of the capillary flowable adhesive (17), an overcrossing with the clothes hanger hook stem (13) is produced.

## Revendications

1. Procédé pour arrêter, en particulier pour arrêter à nouveau, la possibilité de rotation d'un crochet de cintre (12) dans un corps de cintre (11) d'un cintre (10), **caractérisé en ce que** le crochet de cintre (12) est humidifié, en particulier dans la zone d'une tige du crochet de cintre (13), avec une colle coulant de manière capillaire (17), de telle sorte que la colle coulant de manière capillaire (17) s'infiltre, dans la zone d'un point de jonction, entre le crochet de cintre (12) et le corps de cintre (11), dans un intervalle (20) entre le crochet de cintre (12) et le corps de cintre (11).

2. Procédé selon la revendication 1, **caractérisé en ce que** la colle coulant de manière capillaire (17) est appliquée sur le crochet de cintre (12) avec une pipette (15), qui est de préférence élastique au niveau de son extrémité libre.

3. Procédé selon la revendication 1 ou 2, **caractérisé en ce que** la pipette (15) touche le crochet de cintre lors de l'application de la colle coulant de manière capillaire (17) dans la zone de la tige du crochet de cintre (13).

4. Procédé selon la revendication 3, **caractérisé en ce que** l'extrémité libre de la pipette est positionnée et orientée, lors de l'application de la colle coulant de manière capillaire (17), de telle sorte qu'il en résulte un croisement avec la tige du crochet de cintre (13).

5. Dispositif pour arrêter, en particulier pour arrêter à nouveau la possibilité de rotation d'un crochet de cintre (12) dans un corps de cintre (11) d'un cintre (10), **caractérisé par** un applicateur de colle comprenant une pipette (15) et une colle coulant de manière capillaire (17), auquel est attribué un dispositif de transport pour transporter des cintres (10), la pipette (15) étant positionnée avec son extrémité libre dans la zone de la trajectoire des cintres (10) de telle sorte que, lors du transport des cintres (10), la pipette (15) touche successivement avec son extrémité libre un crochet de cintre (12) respectivement, en particulier dans la zone d'une tige de crochet de cintre (13) pour appliquer la colle coulant de manière capillaire (17) dans la zone d'un point de jonction, entre le crochet de cintre (12) et le corps de cintre (11), de telle sorte que la colle coulant de manière capillaire (17) s'infiltre dans un intervalle (20) entre le crochet de cintre (12) et le corps de cintre (11).

6. Dispositif selon la revendication 5, **caractérisé en ce que** la pipette (15) est élastique au niveau de son extrémité libre.

7. Dispositif selon la revendication 6, **caractérisé en ce que** l'extrémité libre de la pipette (15) est positionnée et orientée de telle sorte qu'il en résulte un croisement avec la tige du crochet de cintre (13) lors de l'application de la colle coulant de manière capillaire (17).
